# EUROPEAN PATENT APPLICATION

(11) **EP 2 189 898 A1**
(43) Date of publication of application: **26.05.2010**
(21) Application number: 08020320.1
(22) Date of filing: 21.11.2008
(51) Int. Cl.: G06F 9/44, H04M 1/725

(54) **Editor for graphical user interfaces**

(71) Applicant: Vodafone Holding GmbH, 40213 Düsseldorf (DE)
(72) Inventor: Weisscher, Alard, NL-6231 LG Meerssen (DE); Eschenauer, Laurent, B-4102 Ougrée (DE)
(74) Representative: Jostarndt, Hans-Dieter

(57) **Abstract**

A mobile communication device is suggested. The mobile communication device comprises an operating system for the mobile communication device, a radio interface for contacting to a wireless network, a display on which a graphical user interface is displayed to enable the user to operate the mobile communication device according to the operating system, and a local storage where data files associated with the graphical user interface are stored. A graphical user interface manager enables the download of a new graphical user interface from a remote device. The user has therefore the possibility to change the graphical user interface of his mobile communication device. Furthermore, a method for editing a graphical interface for a mobile communication device is suggested. The method comprises the following steps;
- providing a template for pages and/or screens of the graphical user interface;
- providing predefined components;
- placing the components on the pages and/or screens; and
- associating a page and/or a screen with a menu level of the graphical user interface.

A server is suggested providing a web site on which an editor for graphical user interfaces is hosted, wherein the editor allows editing components and menu flows in the graphical user interface. Finally, a system comprising the mobile communication device and the server are suggested.

## Description

### Technical field

The present invention is related to an editor for graphical user interfaces for mobile communication devices. In particular, the present invention is related to a mobile communication device according to claim 1.

### Background of the invention

When today a mobile telephone is released on the market its graphical user interface i.e. the software part of the telephone user interface is a fixed component usually designed by a manufacturer and/or the network provider and programmed in the manufacturing environment of the mobile telephone. Every mobile telephone user interface is inevitably a compromise given the fact it needs to serve a huge audience with very different needs. This means menus are filled with applications which some users never use, the whole display is showing inappropriate elements and for specific information the user needs to open a browser to find this information. Dependant on how many submenus the user has to open this may be a very inefficient process in some cases.

Such menus may differ very greatly in terms of their structure, the number of parameters displayed and the difficulty of using them. The different desires, demands and capabilities of the users mean that there is generally not a single menu which meets the demands of all potential users. In practice, by way of example, a particular menu may be far too complicated and incomprehensible for a first, technically inexperienced user, yet may still be too simple for a second, technically experienced user, because the latter desires further refined setting options or would like to use further services offered.

Even for a single person the most frequently used functionalities may vary throughout a day and a week depending on the context of the daily life of the user. At work, usually calling numbers or caller lists as well as business e-mail functionalities are most important. At home, the same user may never access his business e-mail but rather use a camera and a photo gallery to show photos to visitors. At leisure times, for example on a festival the most important things to this user are latest updates about the festival and notifications when a favorite band starts playing. During holidays a personal blog may be the most frequently accessed service.

The graphical user interface of today's mobile telephones can only be adapted to a very little extent to fit to the personal context of the user let alone to a varying context. At most the user has the possibility in some cases to make some accommodations. E.g. he may configure some aspects of the graphical user interface such as the language and the date format. He may also change the look and feel of the graphical user interface by selecting a template or by "skinning" the mobile telephone, i.e. changing the appearance of elements shown on the display. In some cases, the user may also install additional applications on the telephone.

From US 2005/0289227 A1 a method for editing a new interface of a portable device by using a browser is known. According to the known method a new interface of the portable device is edited with texts and graphics provided on a website associated with a server. The user of the portable device connects to the internet and logs in to a website associated with a server. On the server he may edit text or graphs a window or a picture frame of a new user interface. After the editing is finished the user downloads the information associated with the new user interface into a specific folder of the portable electronic device to replace the original graphical user interface of the device. In this way a personal style of the user interface can be created.

Taking this as a starting point there remains a desire to provide a user the possibility to even further adapt the graphical user interface or to create a new graphical user interface for a mobile communication device according to his needs and preferences.

### Brief description of the invention

The present invention suggests a mobile communication device comprising an operating system for the mobile communication device, a radio interface for contacting to a wireless network, a display on which a graphical user interface is displayed to enable the user to operate the mobile communication device according to the operating system, and a local storage where data files associated with the graphical user interface are stored. A graphical user interface manager is provided enabling the download of a new graphical user interface from a remote device. The user has therefore the possibility to change the graphical user interface of his mobile communication device

Advantageously, the graphical user interface manager controls the storage of the data files associated with the new graphical user interface in the local storage.

According to a second aspect the present invention suggests a method for editing a graphical interface for a mobile communication device, wherein the method comprises the following steps;
- providing a template for pages and/or screens of the graphical user interface;
- providing predefined components;
- placing the components on the pages and/or screens; and
- associating a page and/or a screen with a menu level of the graphical user interface.

According to a development the inventive method further comprises the step of providing graphical elements and presenting them on a page and/or screen . The graphical elements can be used to create a personal style of the user interface.

The method may further comprise the step of associating the graphical elements with the components. Components are typically functionalities a mobile communication device can perform such as a calendar, messages, media players etc.

It has been found useful when the method further comprises the step of linking the pages and/or screens with buttons. The buttons may be virtual buttons or icons which can be selected by placing a cursor on these buttons and clicking or selecting the button.

The method may advantageously further comprise the step of establishing links between different pages and/or screens to create a flow of menu levels in the graphical user interface. In this way the user may design not only the look and feel of the graphical user interface but also the flow of screens and the different functionalities provided by the different screens.

In a very useful embodiment of the inventive method further comprises the step of transferring the graphical user interface to a mobile communication device. The method can in this way be implemented as an application on a server an thus it can benefit from a higher computation power and larger memory resources to be more user friendly during the design of the graphical user interface.

According to a third aspect the present invention suggests a server providing a web site on which an editor for graphical user interfaces is provided, wherein the editor allows editing components and menu flows in the graphical user interface.

According to an embodiment of the inventive server a download manager is provided which executes the transfer of data files associated with the edited graphical user interface to a receiving device. As mentioned above, the development and design of a graphical user interface is more convenient than on a mobile communication device because the server has much more computing power.

Finally, according to a forth aspect the present invention suggests a system comprising a mobile communication device according to the first aspect of the invention and a server according to the third aspect of the invention.

Further advantages of the present invention will become apparent when reading the detailed description appended with drawings.

### Brief description of the drawing

In the drawing embodiments of the present invention are illustrated. It shows;
Fig. 1 a top view on a mobile phone;
Fig. 2 an illustration of a detailed view of the display of the mobile telephone of Fig. 1;
Fig. 3 architecture of a system embodying the present invention; and
Fig. 4 a schematical representation of the screen of an editor enabling a user to create a graphical user interface for the mobile communication device.

In the drawing identical or similar elements are labeled with the same reference numbers.

### Detailed description

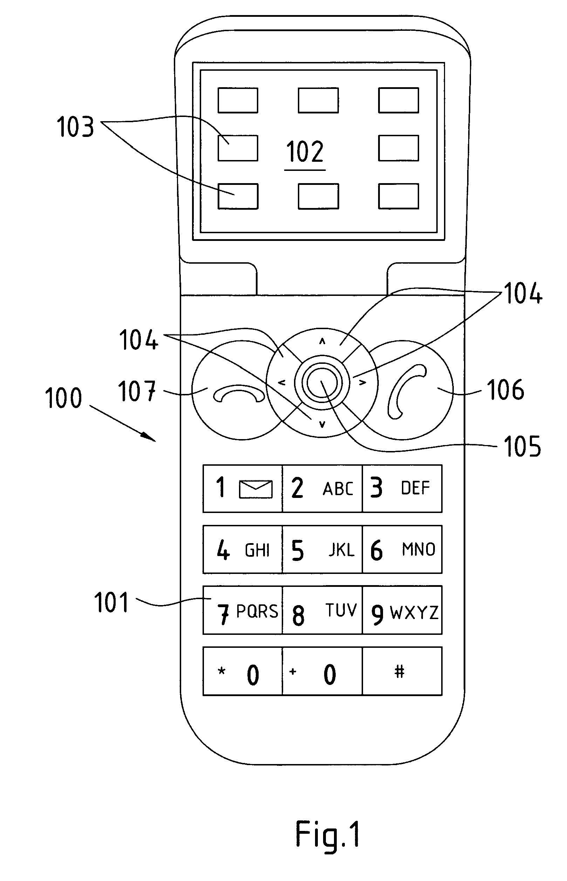

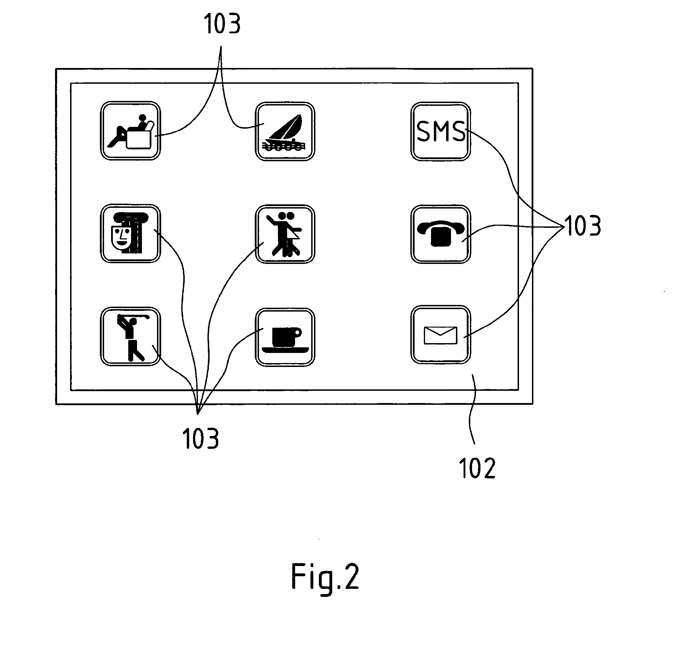

Figure 1 shows a schematical front view of mobile telephone which is labelled as a whole with the reference number 100. In the lower part of the front side of the mobile telephone 100 there is a key pad 101 enabling a user to input telephone numbers and text. In the upper portion of the front side of the mobile telephone 100 there is a display 102 for displaying dialed telephone numbers as well as telephone numbers of callers. The display 102 is also utilized to display the text of SMS messages and the visual contents of MMS messages. The display 102 is also used to display icons 103 enabling the user to access in a quick and convenient way certain functionalities of the mobile telephone such as SMS messaging, MMS messaging, e-mails and address books to name only a few examples. This aspect will be described with reference to figure 2 showing the display 102 in greater detail. In order to select a certain functionality the user moves a cursor (not shown in figure 1) onto an icon 103 displayed on the screen 102 by cursor buttons 104 and pushes a select button 105 to execute the selection. The mobile telephone 100 further includes a button 106 to initiate a telephone call and a button 107 to terminate the telephone call.

In connection with the present invention the mobile telephone 100 is only a representative of different types of mobile communication devices such as personal data assistants (PDA). For the sake of simplicity, however, we refer only to a mobile telephone but other mobile communication devices may take the place of the mobile telephone in connection with the present invention. The present invention is not limited to mobile telephones and includes any other types of mobile communication devices having a graphical user interface.

The mobile telephone is wirelessly connected to a PLMN (Public Land Mobile Network) via a radio access network. The PLMN is the core network of the mobile communication system operated by a mobile network operator and may be configured according to the GSM standard or according to the UMTS standard, for example. The radio access network may be configured as a GERAN (GSM Edge Radio Access Network) according to the GSM standard or as an UTRAN (Universal Terrestrial Radio Access Network) according to the UMTS standard, for example. The UMTS standard permits the user to connect wirelessly to the internet at a comparable data rate as with DSL connections.

In figure 2 the display 102 of the mobile telephone 100 shown in figure 1 is shown in greater detail. In figure 2 the different kinds of icons 103 and the functionality which is associated with each of these icons 103 is visible. In the example shown in figure 2 the functionalities are telephone calls, email editing and sending, SMS messaging, appointments with friends, sport events, cultural events and other items which are important for the user of the mobile telephone 100. The described functionalities are only meant as illustrative examples and shall not be construed to limit the scope of the present invention.

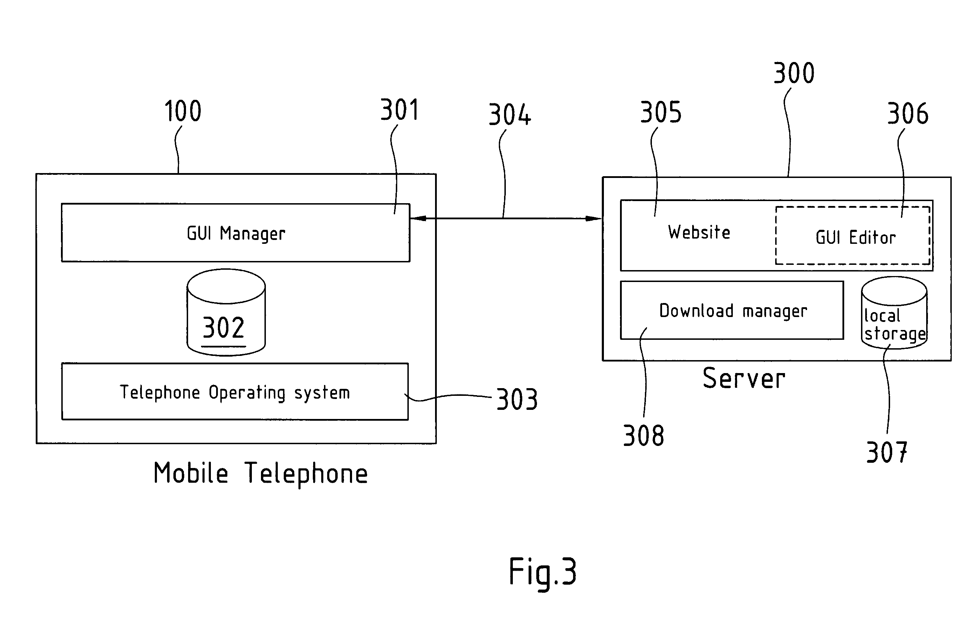

Figure 3 shows a high level architecture of a system which is capable to implement the present invention. The system comprises the mobile telephone 100 and a server 300. The mobile telephone 100 includes a graphical user interface manager 301 (graphical user interface manager) and a local storage 302. In the local storage 302 a plurality of different kinds of graphical user interfaces may be stored. The graphical user interface manager 301 enables the user to select one of the graphical user interfaces which are available on the local storage 302 such that the operating system of the mobile telephone 100 presents the selected graphical user interface to the user. The graphical user interface manager offers the user the possibility to replace the graphical user interface which is installed on his mobile phone with another one displaying different data and having a different flow of menus i.e. the user may change the sequence of screens and how to navigate from one screen to another one. This is a considerable advantage over the prior art because designing and building a mobile telephone user interface is at present very difficult and complex such that it is reserved to specialized designers and engineers. The graphical user interfaces stored in the local storage displays a menu enabling a user to manually switch to another graphical user interface.

In another embodiment the user can switch between different user interfaces by using a hardware button.

The local storage 302 is a memory device inside the telephone, a memory included in the subscriber identity module of the mobile telephone or an additional memory card that can be inserted into the mobile telephone. The mobile telephone 100 includes a telephone operating system 304 which is controlled by the user through the graphical user interface currently selected by the graphical user interface manager 301. The telephone operating system 303 comprises all hard- and software to enable native telephone functionalities e.g. setting up and receiving telephone calls and email, SMS (short message service) and MMS (multimedia message service) communication to name only a few. In spite of the new flexibility that the invention offers there may still be a situation that the plurality of graphical user interface stored in the local storage 302 does still not meet all needs of a specific user. Therefore, the graphical user interface manager 301 also enables the user to connect to the server 300 via a data communication link 304.

The data communication link 304 between the mobile telephone 100 and the server 300 is established wirelessly via conventional data communication services offered by service providers. The server 300 hosts a website 305 on which an editor 306 for graphical user interface is accessible. The editor 306 enables the user to remotely configure the graphical user interface of his mobile telephone by editing a new graphical user interface with the editor 306. The process of editing a new graphical user interface will be described further below. The data files associated with the graphical user interface are stored in a local storage 307 of the server 300. A download manager 310 is an application running on the server 300 which accesses the data file associated with the new graphical user interface and transfers it via the data communication link 304 to the graphical user interface manager 301. As soon as the data file associated with the selected graphical user interface has been downloaded completely, it is stored in the local storage 302 of the mobile telephone 100. The new graphical user interface is then available for the user of the mobile telephone. The server 300 and the mobile telephone 100 cooperate to form a system enabling a user to replace a graphical user interface stored in the local storage 302 of the mobile telephone 100 by a new graphical user interface which has been edited on the website 305 of the server 300.

In the following the creation of a new graphical user interface by means of the editor 306 is described.

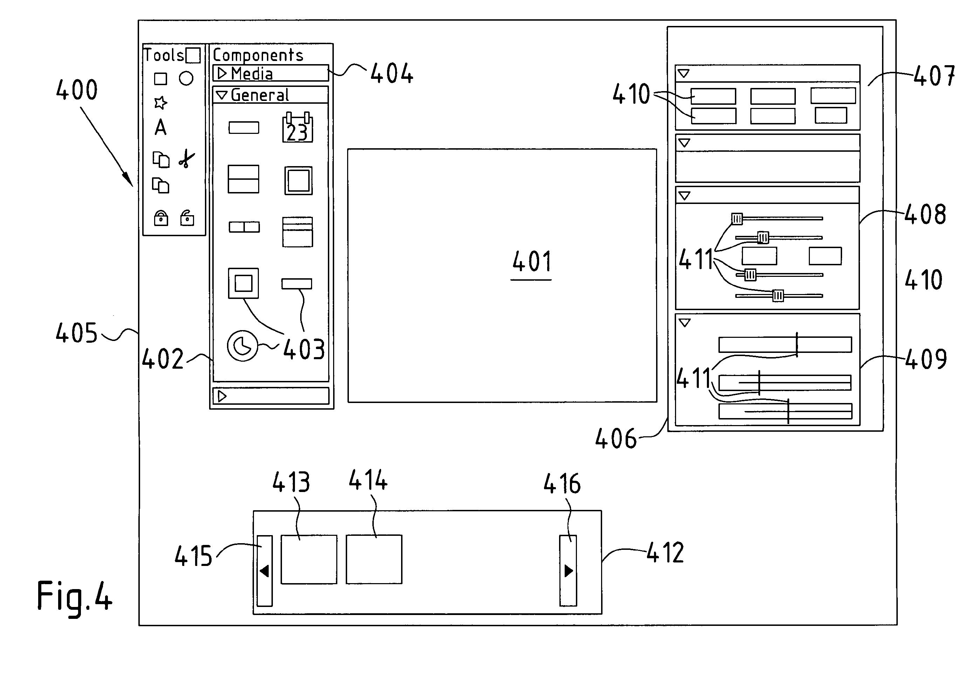

Figure 4 shows a screen 400 of the editor 306. The editor is a so-called WYSIWYG ("what you see is what you get") editor. In the center of the screen there is a template 401 for a first level of the graphical user interface to be designed. The template 401 may be empty but it may also be a menu of an already existing graphical user interface. In the latter case the editor 306 is only used to amend or adapt an existing graphical user interface. This case is a kind of simplification of a situation where a user intends to make a completely new graphical user interface. Therefore this case shall not be considered here. The template 401 is a container for the actual content and forms a page or a screen of the graphical user interface. The content is composed of different components which are placed by the user onto the template 401 in the course of the editing process. Each component has properties that the user can edit. Sample components include context, camera, browser, media browser, key pad lock, mail, messages, calendar, maps, status, auto and/or video player, notifications, buttons etc.

In figure 4 a window 402 displays the available components. The components are visualized in window 402 by differently designed icons 403. It is noted that in figure 4 the icons 403 are only shown in a simplified manner. In addition to that, the window 402 offers the user to also include different kinds of media into the graphical user interface such as music, pictures or video clips. In order to select media the user has to click on a media icon 404. An edit window 405 provides a possibility for the user to perform conventional edit functions inside the template 401 such as copying, cutting and pasting, changing font types or sizes etc. On the right hand side the screen 400 displays a properties windows 406 allowing a user to control the properties of the template 401 which has been filled with components.

A first sub window 407 permits the user to define the geometrical dimensions that are to be applied for the graphical user interface including the width and length of tool bars, the size of the icons 103 in two dimensions and others. In sub window 408 the user can adjust parameters defining the appearance of the graphical user interface comprising the sharpness of borders and opacity of graphical elements used in the graphical user interface. Finally, a sub window 409 provides the possibility to adjust parameters determining the colours used in the graphical user interface such as tint and saturation of the colours used in the graphical user interface. The adjustable parameters can be varied by the user by manipulating numerical values presented fields 410 in the sub windows 407 to 409 or by shifting a slider 411 on a bar to a different position using a cursor on the screen 400. Such technologies are known in the prior art and therefore do not need to be described in detail here.

Step by step the user transforms the original template into a page of a new graphical user interface. When the page is completed the user clicks on a save button in the window 405 trigger the storage of the page on the local storage 307 of the server 300. Then the user can open a new template 401 to create the next page of the graphical user interface. The pages and screens can be linked with buttons. This functionality is available in window 402 presenting the components. Furthermore, the editor provides assets which is media content that can be used in the graphical user interface like icons and/or backgrounds. Once finished, configuration files for the mobile telephone can be generated that can be transferred manually or over the air to the mobile telephone. A bar 410 shows all finished and stored pages of the graphical user interface in a reduced size. In the situation shown in figure 4 there are already two finished pages 411 and 412 shown in the bar 410 while the user is working on a third page. Arrow buttons 415 and 416 enable the user to leave backwards and forwards, respectively, through the pages of the graphical user interface. In this way the user can easily monitor the progress and/or status of his work on the graphical user interface. When the graphical user interface is finalized the user stores it in the local storage 307 of the server. Then the download manager 308 and the graphical user interface manager 301 of the mobile telephone 100 perform the download of the new graphical user interface to the mobile telephone 100. Once received the graphical user interface manager 301 stores the new graphical user interface in the local storage of the mobile telephone 100.

The advantage of the present invention is that every web designer or knowledgeable user is able to create a new experience for a graphical user interface for a mobile telephone. In this way users can create very specific graphical user interface experiences that are relevant to them because inappropriate elements can be left out while elements that are important for the user can be moved to the foreground of the graphical user interface. Furthermore, it is possible to develop a new graphical user interface experience very quickly based on templates which are made available to the user. Another advantage is that the user can change the graphical user interface of the mobile telephone depending on his needs or on the context. For example, he may have available different kinds of graphical user interfaces for specific vacations like holidays, a concert, a wedding and last but not least for his normal working days.

The solution is a simple web based WYSIWYG ("what you see is what you get") editor to design a graphical user interface based on the notion of the components a specific user has. The editor is an application programming interface to create the new graphical user interface.

While the invention has been illustrated and described in detail in the drawings and foregoing description, such illustration and description are to be considered illustrative or exemplary and not restrictive; the invention is not limited to the disclosed embodiments. Particularly, the invention is not limited to a download of an application or program code to the local storage 302. A person skilled in the art recognises that other data can be downloaded to the local storage 302 in the same way as it has been described before in connection with the download of a program code of an application. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### List of reference numerals

- 100: mobile telephone
- 101: key pad
- 102: display
- 103: icon
- 104: cursor buttons
- 105: select button
- 106,107: buttons
- 300: server
- 301: graphical user interface manager
- 302: local storage
- 303: telephone operating system
- 304: data communication link
- 305: web site
- 306: editor for graphical user interface
- 307: local storage
- 308: download manager
- 400: screen
- 401: template
- 402: window
- 403: icons
- 404: media icon
- 405: edit window
- 406: properties window
- 407: sub window
- 408: sub window
- 409: sub window
- 410: field
- 411: slider
- 412: bar
- 413: finished page
- 414: finished page
- 415: rearward, forward button
- 416: rearward, forward button

## Claims

1. Mobile communication device comprising an operating system for the mobile communication device (100), a radio interface for contacting to a wireless network, a display (102) on which a graphical user interface is displayed to enable the user to operate the mobile communication device according to the operating system, and a local storage (302) where data files associated with the graphical user interface are stored, wherein a graphical user interface manager (301) is provided enabling the download of a new graphical user interface from a remote device (300).

2. Mobile communication device according to claim 1, wherein the graphical user interface manager (301) controls the storage of the data files associated with the new graphical user interface in the local storage (302).

3. Method for editing a graphical interface for a mobile communication device, wherein the method comprises the following steps;
- providing a template (401) for pages and/or screens of the graphical user interface;
- providing predefined components (403);
- placing the components (403) on the pages and/or screens; and
- associating a page and/or a screen with a menu level of the graphical user interface.

4. Method according to claim 3, wherein the method further comprises the step of providing graphical elements (406, 407, 408); and
presenting the graphical elements on a page and/or screen.

5. Method according to claim 4, wherein the method further comprises the step of associating the graphical elements with the components.

6. Method according to claim 3, wherein the method further comprises the step of linking the pages and/or screens with buttons (103).

7. Method according to claim 5, wherein the method further comprises the step of establishing links between different pages and/or screens to create a flow of menu levels in the graphical user interface.

8. Method according to one or several of the proceeding claims, wherein the method further comprises the step of transferring the graphical user interface to a mobile communication device (100).

9. Server providing a web site (305) on which an editor (306) for graphical user interfaces is provided, wherein the editor (306) allows editing components and menu flows in the graphical user interface.

10. Server according to claim 9, wherein a download manager (308) is provided which executes the transfer of data files associated with the edited graphical user interface to a receiving device (100).

11. System comprising a mobile communication device (100) according to one or several of the proceeding claims and server (300) according to one or several of the proceeding claims.
